# EUROPÄISCHE PATENTSCHRIFT

(11) **EP 2 467 415 B1**
(45) Veröffentlichungstag und Bekanntmachung des Hinweises auf die Patenterteilung: **09.10.2019**
(21) Anmeldenummer: 10742832.8
(22) Anmeldetag: 17.08.2010
(51) Int. Cl.: C08G 75/23

(54) **VERFAHREN ZUR HERSTELLUNG VON HALOGENARMEN POLYBIPHENYLSULFON-POLYMEREN**
METHOD FOR PRODUCING LOW-HALOGEN POLYBIPHENYLSULFONE POLYMERS
PROCÉDÉ DE PRODUCTION DE POLYMÈRES DE POLYBIPHÉNYLSULFONE À FAIBLE TENEUR EN HALOGÈNE

(30) Priorität: 20.08.2009 EP 09168231
(43) Veröffentlichungstag der Anmeldung: 27.06.2012
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); LANGE, Gerhard, 69198 Schriesheim (DE); ERBES, Jörg, 76137 Karlsruhe (DE); DIETRICH, Matthias, 69469 Weinheim (DE); INCHAURRONDO, Nicolas, 68165 Mannheim (DE); SIGWART, Christoph, 69469 Weinheim (DE)
(74) Vertreter: BASF IP Association
(86) Internationale Anmeldenummer: PCT/EP2010/061924
(87) Internationale Veröffentlichungsnummer: WO 2011/020823

(56) Entgegenhaltungen:
- EP-A2- 0 106 023
- DE-A1- 2 719 305
- US-A- 4 794 155

## Beschreibung

Die vorliegende Erfindung betrifft ein Verfahren zur Herstellung von halogenarmen Polybiphenylsulfon-Polymeren, die so erhältlichen Polybiphenylsulfon-Polymere mit einem Gehalt an polymergebundenem Halogen von weniger als 400 ppm, thermoplastische Formmassen enthaltend die genannten Polybiphenylsulfon-Polymere und deren Verwendung zur Herstellung von Formkörpern, Fasern, Filmen, Membranen oder Schäumen

Polybiphenylsulfon-Polymere gehören zur Gruppe der Polyarylenether und damit zur Klasse der Hochleistungsthermoplaste. Neben der hohen Wärmeformbeständigkeit weisen die Polybiphenylsulfon-Polymere eine überragende Kerbschlagzähigkeit und exzellentes Brandverhalten auf.

Die Herstellung von Polybiphenylsulfon-Polymeren ist beispielsweise aus der DE 1957091, der EP 000361 und der EP 0 347 669 bekannt. Die WO 2000/018824 offenbart ein Verfahren zur Herstellung von Polybiphenylsulfon-Polymeren mit einem geringen Anteil zyklischer Oligomere. Die EP 1272547 beschreibt Polybiphenylsulfon-Polymere mit besonders geringer Eigenfarbe, erhalten durch Kondensation der Monomere 4,4'-Dihydroxybiphenyl und 4,4'-Dichlordiphenylsulfon in Anwesenheit feinteiliger Pottasche. Im Stand der Technik werden die Edukte üblicherweise in äquimolaren Mengen eingesetzt.

Der aus den bekannten Verfahren resultierende Gehalt an polymergebundenem Halogen, insbesondere Chlor in den Polybiphenylsulfon-Polymeren ist jedoch für viele Anwendungen zu hoch und genügt häufig Brandschutzerfordernissen nicht. Für Anwendungen im Bereich der Elektronik wie z. B. Schalter, Gehäuse, Folien werden oft sehr geringe Chlorgehalte gefordert. Zudem ist die Eigenfarbe der nach dem Stand der Technik erhältlichen Polybiphenylsulfon-Polymere oft nicht zufriedenstellend. Polybiphenylsulfon-Polymere mit besonders geringer Eigenfarbe wären somit wünschenswert. Die aus dem Stand der Technik bekannten Polybiphenylsulfon-Polymere weisen darüber hinaus eine in vielen Fällen unzureichende Reißdehnung auf.

Aus J.E. McGrath et. al., Polymer 25 (1984), 1827 ist dem Fachmann bekannt, wie das Molekulargewicht bei der Kondensation von Polyarylensulfonen auf Basis von Bisphenol-A gesteuert werden kann. Kommerzielle Polyarylenether wie z.B. Sumika Excel® weisen überwiegend Chlorendgruppen auf. Ein Verfahren zur Herstellung von Polybiphenylsulfon-Polymeren unter Verwendung eines Überschusses an der aromatischen Dihydroxyverbindung und in Anwesenheit von Wasser und/oder eines Metallhydroxids ist bislang nicht bekannt.

US 4 794 155 A beschreibt Polybiphenylsulfon Polymer, die zwingend Aktivierungsgruppen enthalten und die nicht auf Verwendung chlorhaltiger Monomerer beruhen.

EP 0 106 023 A beschreibt Polybiphenyl Polymere, die zwingend ungesättigte Endverkappung aufweisen.

DE 27 109 305 A1 beschreibt Polybiphenyl Polymere, die silanendverkappt sind.

Die durch das Verfahren erhältlichen Polybiphenylsulfon-Polymere der vorliegenden Erfindung sollten die vorgenannten Nachteile nicht oder in geringerem Maße aufweisen. Es war insbesondere eine Aufgabe der vorliegenden Erfindung, ein Verfahren zur Herstellung von Polybiphenylsulfon-Polymeren zur Verfügung zu stellen, welches deren Herstellung bei guter Kontrolle des Molekulargewichts ermöglicht. Die Polybiphenylsulfon-Polymere sollten darüber hinaus auch bei niedriger Scherrate eine geringe Viskosität aufweisen und insbesondere in einem Formwerkzeug gut fließen.

Die Aufgabe der vorliegenden Erfindung bestand insbesondere darin, Polybiphenylsulfon-Polymere bereitzustellen, welche überlegene mechanische Eigenschaften aufweisen, einen geringen Anteil an polymergebundenem Halogen, insbesondere Chlor enthalten und außerdem einen gegenüber dem Stand der Technik reduzierten Restlösungsmittelanteil aufweisen. Die Polybiphenylsulfon-Polymere sollten darüber hinaus eine geringe Eigenfarbe aufweisen.

Die vorliegende Aufgabe wird gelöst durch ein Verfahren zur Herstellung von Polybiphenylsulfon-Polymeren umfassend
(a) die Bereitstellung der Komponenten (a1) bestehend aus mindestens einer aromatischen Dihydroxyverbindung und (a2) bestehend aus mindestens einer aromatischen Sulfonverbindung mit zwei Halogensubstituenten, wobei die Komponente (a1) 4,4'-Dihydroxybiphenyl umfasst und anschließend
(b) die Umsetzung der Komponente (a2) mit einem molaren Überschuss der Komponente (a1) in einem Lösungsmittel, unter Verwendung von Alkalimetallcarbonaten als Base, wobei während oder nach der Umsetzung Wasser und/oder ein Metallhydroxid zugegeben wird.

Polybiphenylsulfon-Polymere mit einem Gehalt an polymergebundenem Halogen, insbesondere Chlor von weniger als 400 ppm und mindestens 10 ppm, erhältlich nach diesem Verfahren, sind aus dem Stand der Technik bislang nicht bekannt.

Bevorzugte Ausführungsformen sind den Ansprüchen und der folgenden Beschreibung zu entnehmen. Kombinationen bevorzugter Ausführungsformen verlassen den Rahmen der vorliegenden Erfindung nicht, insbesondere was Kombinationen bevorzugter Ausführungsformen der nachstehend ausgeführten Schritte (a) und (b) anbelangt.

### Schritt (a)

Gemäß Schritt (a) des erfindungsgemäßen Verfahrens erfolgt die Bereitstellung der Komponenten (a1) bestehend aus mindestens einer aromatischen Dihydroxyverbindung und (a2) bestehend aus mindestens einer aromatischen Sulfonverbindung mit zwei Halogensubstituenten, wobei die Komponente (a1) 4,4'-Dihydroxybiphenyl umfasst.

Unter Polybiphenylsulfon-Polymer sollen Polyarylenethersulfone verstanden werden, welche 4,4'-Dihydroxybiphenyl als Monomereinheit umfassen. Folglich umfasst der Begriff Polybiphenylsulfon-Polymer unter anderem Polybiphenylsulfon-Homo- und Copolymere. Unter Polyarylenethersulfonen werden Polymere verstanden, in denen Aryleneinheiten über Sauerstoff- sowie Sulfonbrücken verknüpft vorliegen. Ein Polybiphenylsulfon-Polymer, welches ausschließlich aus den Monomereinheiten 4,4'-Dihalogendiphenylsulfon und 4,4'-Dihydroxybiphenyl aufgebaut ist, wird als Polybiphenylsulfon (PPSU) bezeichnet.

Im Rahmen der vorliegenden Erfindung wird zur Charakterisierung der Struktur der Polybiphenylsulfon-Polymere auf die eingesetzten Monomereinheiten Bezug genommen. Es ist für den Fachmann offensichtlich, dass die Monomereinheiten im Polymer in umgesetzter Form vorliegen und dass die Umsetzung der Monomereinheiten durch nucleophile aromatische Polykondensation unter rechnerischer Abspaltung einer Einheit Halogenwasserstoff als Abspaltungsgruppe erfolgt. Folglich ist die Struktur des resultierenden Polymers unabhängig von der genauen Art der Abspaltungsgruppe.

Erfindungsgemäß besteht Komponente (a1) aus mindestens einer aromatischen Dihydroxyverbindung und umfasst 4,4'-Dihydroxybiphenyl. Darüber hinaus kann Komponente (a1) insbesondere folgende Verbindungen umfassen:
- Dihydroxybenzole, insbesondere Hydrochinon und Resorcin;
- Dihydroxynaphthaline, insbesondere 1,5-Dihydroxynaphthalin, 1,6- Dihydroxynaphthalin, 1,7- Dihydroxynaphthalin, und 2,7- Dihydroxynaphthalin;
- Andere Dihydroxybiphenyle als 4,4'- Dihydroxybiphenyl, insbesondere 2,2'-Dihydroxybiphenyl;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Vorzugsweise enthält die Komponente (a1) mindestens 50, insbesondere mindestens 60, besonders bevorzugt mindestens 80 Gew.-% 4,4'-Dihydroxybiphenyl. Ganz besonders bevorzugt ist die Komponente (a1) 4,4'-Dihydroxybiphenyl.

Im Rahmen von Komponente (a2) geeignete aromatische Sulfonverbindungen mit zwei Halogensubstituenten sind dem Fachmann grundsätzlich bekannt. Bevorzugte Verbindungen (a2) sind insbesondere Dihalogendiphenylsulfone wie 4,4'-Dichlordiphenylsulfon, 4,4'-Difluordiphenylsulfon, 4,4'-Dibromdiphenylsulfon, Bis(2-chlorophenyl)sulfone, 2,2'-Dichlordiphenylsulfon und 2,2'-Difluordiphenylsulfon. 4,4'-Dichlordiphenylsulfon und 4,4'-Difluordiphenylsulfon sind besonders bevorzugt. Ganz besonders bevorzugt ist 4,4'-Dichlordiphenylsulfon.

Die Umsetzung von 4,4'-Dihydroxybiphenyl als Komponente (a1) und 4,4'-Dihalogendiphenylsulfon als Komponente (a2), aus der Polybiphenylsulfon (PPSU) als Produkt resultiert, ist insbesondere bevorzugt.

### Schritt (b)

Gemäß der vorliegenden Erfindung umfasst das Verfahren zur Herstellung von Polybiphenylsulfon-Polymeren die Umsetzung der Komponente (a2) mit einem molaren Überschuss der Komponente (a1) in einem Lösungsmittel, wobei nach der Umsetzung der Komponenten (a1) und (a2) Wasser und/oder ein Metallhydroxid zugegeben wird.

Im Folgenden wird auf genanntes Wasser und/oder Metallhydroxid allgemein als "Hydroxidquelle" Bezug genommen.

Die Verwendung eines Überschusses der Komponente (a1) trägt in Kombination mit der Verwendung der Hydroxidquelle dazu bei, verbunden mit der Zugabe der Hydroxidquelle bei hohen Umsätzen, den Gehalt an polymergebundenem Halogen, insbesondere Chlor zu reduzieren.

Die Umsetzung der Komponenten (a1) und (a2) zu einem Polybiphenylsulfon-Polymer ist dem Fachmann in Bezug auf die Temperatur, das Lösungsmittel und die Zeitdauer an sich bekannt. Die Umsetzung der Ausgangsverbindungen (a1) und (a2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Das molare Verhältnis der Komponenten (a1) zu (a2) beträgt vorzugsweise von 1,005 bis 1,2, insbesondere von 1,005 bis 1,1. In einer besonders bevorzugten Ausführungsform beträgt das molare Verhältnis der Komponenten (a1) zu (a2) von 1,005 bis 1,08, insbesondere von 1,01 bis 1,05, ganz besonders bevorzugt von 1,015 bis 1,04. Hierdurch lässt sich das Molekulargewicht besonders effektiv steuern und kontrollieren, unter gleichzeitig vorteilhafter Auswirkung auf den resultierenden Gehalt an polymergebundenem Halogen, insbesondere Chlor.

Die Hydroxidquelle, d. h. Wasser, Metallhydroxid oder eine Mischung aus Wasser und Metallhydroxid wird vorzugsweise in einer Menge von 0,1 bis 10 Gew.-teilen, insbesondere in einer Menge von 0,5 bis 6 Gew.-teilen, besonders bevorzugt in einer Menge von 1 bis 5 Gew.-teilen bezogen auf 100 Gewichtsteile der Komponenten (a1) und (a2) zugegeben.

Als Hydroxidquelle kommt insbesondere Wasser, Alkalimetallhydroxide und Erdalkalimetallhydroxide sowie deren Mischungen und/oder wässrige Lösungen in Betracht. Bevorzugte Hydroxidquellen sind Wasser und Alkalimetallhydroxide. Bevorzugte Alkalimetallhydroxide sind LiOH, NaOH und KOH. Wässrige Lösungen der vorgenannten Metallhydroxide, insbesondere wässrige Lösungen vorgenannter Alkalimetallhydroxide sind besonders bevorzugt. Es ist somit von besonderem Vorteil, wenn die Hydroxidquelle Alkalimetallhydroxide, insbesondere LiOH, NaOH und/oder KOH, umfasst.

Die Zugabe der Hydroxidquelle kann durch verschiedene Methoden erfolgen. Vorzugsweise erfolgt die Zugabe in verdünnter Form, wobei die zuzugebende Menge der Hydroxidquelle vorzugsweise in demselben Lösungsmittel vorgelöst wird, in dem die Umsetzung durchgeführt wird.

Der Zeitpunkt der Zugabe der Hydroxidquelle kann ebenfalls variieren. Erfindungsgemäß wird die Umsetzung zunächst ohne die Anwesenheit der Hydroxidquelle begonnen. Somit wird gemäß Schritt (b) zunächst die Umsetzung in dem Lösungsmittel durchgeführt und anschließend die Hydroxidquelle zugegeben, so dass nach der Umsetzung der Komponenten (a1) und (a2) die Hydroxidquelle zugegen ist.

Dabei ist erfindungsgemäß die Umsetzung, während der die Polykondensation abläuft, zum Zeitpunkt der Zugabe der Hydroxidquelle im Wesentlichen abgeschlossen. In diesem Fall erfolgt die Zugabe von Wasser und/oder Metallhydroxiden in Anschluss an die Umsetzung der Komponenten (a1) und (a2), d. h. in Anschluss an die Polykondensation. Durch diese Durchführungsvariante wird ein Abbau des Molekulargewichts effektiv vermieden.

Unter Umsetzung der Komponenten (a1) und (a2) ist die Polykondensation unter Bildung eines Polybiphenylsulfon-Polymers zu verstehen.

Die Zugabe der Hydroxidquelle erfolgt vorzugsweise bei einem Umsatz von mindestens 90%, insbesondere mindestens 95%, ganz besonders bevorzugt mindestens 98%. Der Umsatz ist im Rahmen der vorliegenden Erfindung grundsätzlich der molare Anteil der umgesetzten Halogengruppen der Komponente (a2) im Verhältnis zur Gesamtmenge der umgesetzten und nicht umgesetzten Halogengruppen der Komponente (a2). Bei den vorgenannten Umsätzen ist die Polykondensation im Wesentlichen abgeschlossen. Die Temperatur während der weiteren Umsetzung (Nach-Umsetzung) beträgt vorzugsweise von 100 bis 200°C, insbesondere von 130°C bis 180°C. Die genaue Temperatur der Nach-Umsetzung wählt der Fachmann in Abhängigkeit vom gewählten Lösungsmittel.

Es ist für die vorliegende Erfindung von Vorteil, die Reaktionsbedingungen so zu wählen, dass der Umsatz am Ende von Schritt (b) mindestens 95 %, besonders bevorzugt mindestens 98 %, insbesondere mindestens 99 % beträgt. Das Endprodukt weist eine mehr oder weniger breite Molekulargewichtsverteilung ggf. einschließlich von Oligomeren auf, wobei die Endgruppen entweder Halogen- oder Hydroxygruppen, beziehungsweise im Fall der weiteren Umsetzung Alkyl- oder Aryloxygruppen, darstellen und rechnerisch dem von 100 % abweichenden Umsatz entsprechen.

In einer bevorzugten Ausführungsform wird unmittelbar vor, gleichzeitig oder unmittelbar anschließend zur Zugabe der Hydroxidquelle die Temperatur verringert, besonders bevorzugt um 15 bis 80°C, insbesondere um 20 bis 45°C gegenüber der Temperatur bei der Umsetzung der Komponenten (a1) und (a2), d. h. der Temperatur während der Polykondensation. Die Temperatur der Reaktionsmischung kann effektiv verringert werden, indem die Hydroxidquelle verdünnt mit einer geeigneten Menge Lösungsmittel zugegeben wird, welches eine niedrige Temperatur aufweist, insbesondere Raumtemperatur.

Die Zeitdauer der Nach-Umsetzung nach Zugabe der Hydroxidquelle kann über einen weiten Bereich variieren. Üblichweise beträgt die Zeitdauer der Nach-Umsetzung mit der Hydroxidquelle von 15 Minuten bis 8 Stunden, insbesondere von 30 Minuten bis 4 Stunden, besonders bevorzugt von 1 bis 3 Stunden.

Ohne sich beschränken zu wollen, besteht die Vorstellung, dass die erfindungsgemäße Zugabe der Hydroxidquelle eine Substitution der Halogen-Endgruppen unter Verringerung des polymergebundenen Anteils an Halogen, insbesondere Chlor bewirkt.

Gemäß vorliegender Erfindung erfolgt die Umsetzung der Komponenten (a1) und (a2) in einem Lösungsmittel. Bevorzugte Lösungsmittel sind polar aprotische Lösungsmittel. Geeignete Lösungsmittel weisen dabei einen Siedepunkt im Bereich von 80 bis 320°C, insbesondere 100 bis 280°C, bevorzugt von 150 bis 250°C auf. Geeignete polar aprotische Lösungsmittel sind insbesondere hochsiedende Ether, Ester, Ketone, asymmetrisch halogenierte Kohlenwasserstoffe, Anisol, Dimethylformamid, Dimethylsulfoxid, Sulfolan, N-Ethyl-2-pyrrolidon und N-Methyl-2-pyrrolidon (N-Methylpyrrolidon, NMP) sowie Mischungen der vorgenannten Lösungsmittel.

Es wurde überraschenderweise gefunden, dass ein besonders niedriger Gehalt an polymergebundenem Halogen, insbesondere Chlor erhalten wird, wenn als Lösungsmittel ein solches verwendet wird, das N-Methylpyrrolidon umfasst. N-Methylpyrrolidon ist als Lösungsmittel ganz besonders bevorzugt. N-Methylpyrrolidon trägt gleichzeitig zu einem hohen Umsatz der Komponenten (a1) und (a2) bei, da die Reaktion der erfindungsgemäß zum Einsatz kommenden Monomere besonders effizient verläuft.

Die Umsetzung der Komponenten (a1) und (a2) erfolgt vorzugsweise in Gegenwart einer Base (B), um die Reaktivität gegenüber den Halogensubstituenten der Ausgangsverbindungen (a2) zu erhöhen. Es ist bevorzugt, ausgehend von den vorgenannten aromatischen Dihydroxyverbindungen (a1) durch Zugabe einer Base (B) ihre Dikalium- oder Dinatriumsalze herzustellen und mit der Komponente (a2) zur Reaktion zu bringen. Geeignete Basen (B) sind dem Fachmann bekannt.

Basen (B) sind Alkalimetallcarbonate. Die Kombination aus Verwendung von Alkalimetallcarbonaten als Base (B) und der anspruchsgemäßen Durchführung des Verfahrens führt zu besonders günstigen Eigenschaften in Bezug auf die Eigenfarbe, mechanische Eigenschaften und Gehalt an polymergebundenem Halogen, insbesondere Chlor.

Vorzugsweise sind die Basen wasserfrei. Geeignete Basen sind insbesondere wasserfreies Alkalimetallcarbonat, vorzugsweise Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 150 Mikrometer, bestimmt mit einem Partikelgrößenmessgerät in einer Suspension in einer Mischung aus Chlorbenzol/Sulfolan (60/40 Gewichtsanteil). Eine besonders bevorzugte Kombination ist N-Methyl-2-pyrrolidon als Lösungsmittel und wasserfreies Kaliumcarbonat als Base (B).

Es hat sich zudem als vorteilhaft herausgestellt, im Rahmen von Schritt (b) die Menge des Polybiphenylsulfon-Polymers bezogen auf das Gesamtgewicht der Mischung aus Polybiphenylsulfon-Polymer und Lösungsmittel von 10 bis 70 Gew.-%, vorzugsweise von 15 bis 50 Gew.-% einzustellen.

In einer bevorzugten Ausführungsform wird während oder nach der Umsetzung gemäß Schritt (b) mindestens eine aromatische organische Monochlorverbindung als Komponente (a3) zugegeben.

Ohne sich beschränken zu wollen, besteht die Vorstellung, dass die aromatische organische Monochlorverbindung als Kettenregler fungiert. Vorzugsweise weist die aromatische organische Monochlorverbindung eine ähnliche Reaktivität im Rahmen der Umsetzung in Schritt (b) auf wie die Komponente (a2).

Vorzugsweise ist die Komponente (a3) ein aromatisches Monochlorsulfon, insbesondere 4-Monochlordiphenylsulfon. In einer bevorzugten Ausführungsform wird der Überschuss der Komponente (a1) durch die organische Monochlorverbindung (a3) ausgeglichen, welche eine unter den Bedingungen der Umsetzung der Komponenten (a1) und (a2) reaktive Chlorgruppe enthält.

Die molare Menge der Komponente (a3) wird vorzugsweise so gewählt, dass das Doppelte des Überschusses der molaren Menge der Komponente (a1) gegenüber der molaren Menge der Komponente (a2) im Verhältnis zur molaren Menge der Komponente (a3) von 0,98 bis 1,02, insbesondere von 0,99 bis 1,01 beträgt. Demgemäß beträgt 2*((a1) - (a2)) / (a3) vorzugsweise von 0,98 bis 1,02, insbesondere von 0,99 bis 1,01, wobei (a1), (a2) und (a3) die eingesetzten molaren Mengen der jeweiligen Komponente widerspiegeln. Das Doppelte des Verhältnisses ((a1) - (a2) / (a3)) beträgt dabei vorzugsweise 1.

In einer weiteren bevorzugten Ausführungsform, die mit den vorgenannten Ausführungsformen vorteilhaft verknüpft werden kann, erfolgt in Anschluss an Schritt (b) gemäß Schritt (c) eine Umsetzung mit mindestens einer aliphatischen organischen Halogenverbindung. Hierdurch werden reaktive Hydroxy-Endgruppen weiter umgesetzt, das Polymer stabilisiert und so unter Anderem ein weiterer Aufbau der Polymerkette im Rahmen der weiteren Verarbeitung verhindert.

Bevorzugte aliphatische organische Halogenverbindungen sind Alkylhalogenide, insbesondere Alkylchloride, mit linearen oder verzweigten Alkylgruppen mit von 1 bis 10 Kohlenstoffatomen, insbesondere primäre Alkylchloride, besonders bevorzugt Methylhalogenid, insbesondere Methylchlorid.

Die Umsetzung gemäß Schritt (c) wird vorzugsweise bei einer Temperatur von 90° bis 160°C, insbesondere von 100°C bis 150°C durchgeführt. Die Zeitdauer kann über einen weiten Zeitraum variieren und beträgt üblicherweise mindestens 5 Minuten, insbesondere mindestens 15 Minuten. Vorzugsweise beträgt die Zeitdauer der Umsetzung gemäß Schritt (c) von 15 Minuten bis 8 Stunden, insbesondere von 30 Minuten bis 4 Stunden.

Die Zugabe der aliphatischen organischen Halogenverbindung kann über verschiedene Methoden erfolgen. Darüber hinaus kann die Zugabe der aliphatischen organischen Halogenverbindung stöchiometrisch oder im Überschuss erfolgen, wobei der Überschuss beispielsweise bis zu 5-fach sein kann. In einer bevorzugten Ausführungsform erfolgt die Zugabe der aliphatischen organischen Halogenverbindung kontinuierlich, insbesondere durch kontinuierliche Zuführung als Gasstrom.

Es hat sich als vorteilhaft erwiesen, in Anschluss an Schritt (b) bzw. Schritt (c) eine Filtration der Polymerlösung durchzuführen. Hierdurch wird der bei der Polykondensation gebildete Salzanteil sowie eventuell gebildete Gelkörper entfernt.

### Polybiphenylsulfon-Polymere

Ein weiterer Gegenstand der vorliegenden Erfindung sind Polybiphenylsulfon-Polymere, welche gemäß dem erfindungsgemäßen Verfahren erhältlich sind mit einem Gehalt an polymergebundenem Halogen, insbesondere Chlor von weniger als 400 ppm, insbesondere weniger als 300 ppm, besonders bevorzugt weniger als 200 ppm.

Die erfindungsgemäß erhältlichen Polybiphenylsulfon-Polymere weisen einen Gehalt an polymergebundenem Halogen, insbesondere Chlor von weniger als 400 ppm, insbesondere weniger als 300 ppm, besonders bevorzugt weniger als 200 ppm auf. Die untere Grenze des Gehaltes an polymergebundenem Halogen, insbesondere Chlor beträgt verfahrensbedingt üblicherweise mindestens 10 ppm, insbesondere mindestens 20 ppm.

Der Halogengehalt des erhältlichen Polymers entspricht dem Gehalt an Halogenendgruppen und wird im Rahmen der vorliegenden Erfindung mittels Atomspektroskopie bestimmt. Der Gehalt an polymergebundenem Halogen, insbesondere Chlor bezieht sich im Rahmen der vorliegenden Erfindung grundsätzlich auf den Gewichtsanteil und kann alternativ in mg pro kg Einwaage des Polymers angegeben werden.

Polymerzusammensetzungen, welche nach dem erfindungsgemäßen Verfahren erhältlich sind, weisen besonders bevorzugt einen Gehalt an polymergebundenem Halogen, insbesondere Chlor von weniger als 400 ppm und gleichzeitig einen Anteil an Restlösungsmittel von weniger als 300 ppm auf.

Die erfindungsgemäß erhältlichen Polybiphenylsulfon-Polymere zeichnen sich darüber hinaus durch eine Reißdehnung im Zugversuch von mehr als 50 % aus.

Ein weiterer Gegenstand der vorliegenden Erfindung sind thermoplastische Formmassen enthaltend ein erfindungsgemäß erhältliches Polybiphenylsulfon-Polymer.

Die thermoplastische Formmassen der vorliegenden Erfindung können neben dem erfindungsgemäß erhältlichen Polybiphenylsulfon-Polymer außerdem mindestens ein Polymer ausgewählt aus Polyarylenethersulfonen (andere als die erfindungsgemäß erhältlichen Polybiphenylsulfon-Polymere), insbesondere Polyethersulfon (PES) und/oder Polysulfon (PSU), sowie Polyetherimide, Polyphenylensulfide, Polyetheretherketone, Polyimide oder Poly-p-phenylene enthalten.

Die erfindungsgemäßen Formmassen können darüber hinaus Füllstoffe, insbesondere Fasern, besonders bevorzugt Glasfasern enthalten. Entsprechende Füllstoffe sind dem Fachmann bekannt.

Sofern Füllstoffe zum Einsatz kommen, dann werden diese vorzugsweise in einer Menge von 5 bis 150 Gewichtsteilen bezogen auf 100 Gewichtsteile Polymer zugegeben.

In den erfindungsgemäßen thermoplastischen Formmassen können insbesondere alle dem Fachmann bekannten und für den Einsatz in thermoplastischen Formmassen geeigneten Glasfasern vorliegen. Diese Glasfasern können nach dem Fachmann bekannten Verfahren hergestellt und gegebenenfalls oberflächenbehandelt werden. Die Glasfasern können zur besseren Verträglichkeit mit dem Matrixmaterial mit einer Schlichte ausgerüstet sein, wie z.B. in DE 10117715 beschrieben.

In einer bevorzugten Ausführungsform werden Glasfasern mit einem Durchmesser von 5 bis 15 µm, bevorzugt 7 bis 13 µm, besonders bevorzugt 9 bis 11 µm eingesetzt.

Die Einarbeitung der Glasfasern kann sowohl in Form von Schnittglasfasern als auch in Form von Endlossträngen (Rovings) erfolgen. Die Länge der einsetzbaren Glasfasern beträgt in der Regel vor Einarbeitung als Schnittglasfasern in die thermoplastischen Formmassen typischerweise 4 bis 5 mm. Nach der Verarbeitung der Glasfasern, beispielsweise durch Co-Extrusion, mit den anderen Komponenten liegen die Glasfasern üblicherweise in einer mittleren Länge von 100 bis 400 µm, bevorzugt 200 bis 350 µm vor.

Die erfindungsgemäßen Formmassen können als weitere Komponente K Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der weiteren Komponenten K in den erfindungsgemäßen Formmassen beträgt insbesondere von 0 bis zu 30, vorzugsweise von 0 bis zu 20 Gew.-%, insbesondere 0 bis 15 Gew.-%, bezogen auf das Gesamtgewicht der thermoplastischen Formmasse.

Im Fall, dass es sich bei der Komponente K um Stabilisatoren handelt, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf das Gesamtgewicht der thermoplastischen Formmasse.

Pigmente und Farbstoffe sind allgemein in Mengen von 0 bis 10, bevorzugt von 0,05 bis 7 und insbesondere von 0,1 bis 5 Gew.-%, bezogen auf das Gesamtgewicht der thermoplastischen Formmasse enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)2O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind allgemein im Handel üblich.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder lodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gesamtgewicht der thermoplastischen Formmasse, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf das Gesamtgewicht der thermoplastischen Formmasse zugesetzt werden, sind Stearylalkohol, Stearinsäurealkylester und-amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf das Gesamtgewicht der thermoplastischen Formmasse) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70°C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 Gew.-%) verwendet werden.

Des Weiteren können die erfindungsgemäßen Formmassen auch Stearate enthalten. Stearate können entweder durch Umsetzung entsprechender Natriumsalze mit Metallsalzlösungen (zum Beispiel CaCl₂, MgCl₂, Aluminiumsalzen) oder durch direkte Umsetzung der Fettsäure mit Metallhydroxid hergestellt werden (siehe zum Beispiel Baerlocher Additives, 2005). Bevorzugt wird Aluminiumtristearat verwendet.

Die Reihenfolge, in der die Bestandteile der erfindungsgemäßen thermoplastischen Formmasse gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern, vorzugsweise Zweischneckenextrudern, Brabender-Mischern oder Banbury-Mischern sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 280 bis 380°C, bevorzugt 290 bis 370°C, erforderlich. Nach der Extrusion wird das Extrudat in der Regel abgekühlt und zerkleinert.

Die erfindungsgemäßen Formmassen zeichnen sich neben den vorgenannten Vorteilen auch durch gute Fließfähigkeit, hohe Zähigkeit und durch eine geringe Eigenfarbe aus. Die erfindungsgemäßen Formmassen eignen sich daher zur Herstellung von Formteilen für Haushaltsartikel, elektrische oder elektronische Bauteile sowie für Formteile für den Fahrzeugsektor.

Die erfindungsgemäßen thermoplastischen Formmassen können vorteilhaft zur Herstellung von Formkörpern, Fasern, Filmen, Membranen oder Schäumen verwendet werden. Ein weiterer Gegenstand der vorliegenden Erfindung sind Formkörpern, Fasern, Filmen, Membranen und Schäume enthaltend die erfindungsgemäßen thermoplastischen Formmassen.

Die folgenden Beispiele erläutern die Erfindung näher, ohne sie einzuschränken.

### Beispiele

Die Viskositätszahl der Polybiphenylsulfon-Polymere wurde in 1 %iger Lösung von N-Methyl-pyrrolidon bei 25°C bestimmt.

Die erhaltenen Polybiphenylsulfon-Polymere wurden bei einer Massetemperatur von 370°C in einem Zweischneckenextruder (ZSK 18) granuliert. Die Verarbeitung zu Probekörpern erfolgte bei 375°C Massetemperatur und 160°C Werkzeugtemperatur.

Die Eigenfarbe der Produkte wurde durch Messung des Yellowness Index (YI) nach ASTM D 1925 an spritzgegossenen Platten (375°C Massetemperatur, 160°C Werkzeugtemperatur) der Dicke 2 mm bestimmt.

Die verwendeten Monomere (4,4'-Dichlordiphenylsulfon, 4,4'-Dihydroxybiphenyl) wiesen eine Reinheit von mehr als 99,5 % auf.

Es wurden verschiedene Qualitäten von wasserfreiem K₂CO₃ (Pottasche) eingesetzt. Die mittlere Partikelgröße ist als volumengewichteter Mittelwert des Teilchendurchmessers zu verstehen und wurde mit einem Mastersizer 2000 Partikelmessgerät an einer Suspension der Partikel in einer Mischung aus Chlorbenzol/Sulfolan (60/40 Gewichtsanteil) bestimmt.
Pottasche A: mittlere Partikelgröße von 61 µm
Pottasche B: mittlere Partikelgröße von 120 µm.

### Vergleichsversuch 1

Es wurde ein Polyarylenether durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche A) in 2100 ml NMP hergestellt. Diese Mischung wurde 6 Stunden bei 190°C gehalten. Danach wurde der Ansatz durch Zugabe von 1000 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile werden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 71,2 ml/g, die Glastemperatur bei 225°C.

### Vergleichsversuch 2

Es wurde ein Polyarylenether durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche A) in 2100 ml NMP hergestellt. Diese Mischung wurde 6 Stunden bei 190°C gehalten. Danach wurde der Ansatz durch Zugabe von 1000 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 72,0 ml/g, die Glastemperatur bei 225°C.

### Vergleichsversuch 3

Es wurde ein Polyarylenether durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche A) in 2100 ml NMP hergestellt. Diese Mischung wurde 8 Stunden bei 190°C gehalten. Danach wurde der Ansatz durch Zugabe von 1000 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 69,6 ml/g, die Glastemperatur bei 225°C.

### Vergleichsversuch 4

Es wurde ein Polyarylenether durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche A) in 2100 ml NMP hergestellt. Diese Mischung wird 10 Stunden bei 190°C gehalten. Danach wird der Ansatz durch Zugabe von 1000 ml NMP verdünnt. Die Suspension wurde dann bei 130°C 1 Stunde mit Methylchlorid (15 l/h) umgesetzt. Nach Abkühlen auf 80°C wird die Suspension abgelassen, die festen Bestandteile werden durch Filtration abgetrennt und das Polymere durch Fällung in NMP/Wasser 1/9 isoliert. Nach sorgfältigem Waschen mit Wasser wird das Produkt im Vakuum bei 120°C für 12 h getrocknet. Die Viskositätszahl des Produkts lag bei 64,6 ml/g, die Glastemperatur bei 223°C.

### Versuch 5

Es wurde ein erfindungsgemäßes Polybiphenylsulfon-Polymer durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche B) in 2100 ml NMP hergestellt. Diese Mischung wurde 4 Stunden bei 190°C gehalten. Danach wurde der Ansatz durch Zugabe von 500 ml NMP/30 ml VE-Wasser verdünnt und weitere 2 h bei 160°C nachgerührt. Anschließend wurden weitere 500 ml NMP zugegeben. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 71,5 ml/g, die Glastemperatur bei 225°C.

### Versuch 6

Es wurde ein erfindungsgemäßes Polybiphenylsulfon-Polymer durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche B) in 2100 ml NMP hergestellt. Diese Mischung wurde 4 Stunden bei 190°C gehalten. Danach wurde der Ansatz durch Zugabe von 500 ml NMP/30 ml VE-Wasser verdünnt und eine weitere Stunde bei 160°C nachgerührt. Danach wurden weitere 500 ml NMP zugegeben. Die Suspension wurde dann bei 130°C 1 Stunde mit Methylchlorid (15 l/h) umgesetzt. Nach Abkühlen auf 80°C wurde die Suspension abgelassen, die festen Bestandteile werden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 71,5 ml/g, die Glastemperatur bei 225°C.

### Versuch 7

Es wurde ein erfindungsgemäßes Polybiphenylsulfon-Polymer durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche B) in 2100 ml NMP hergestellt. Diese Mischung wurde 4 Stunden bei 190°C gehalten. Danach wurde der Ansatz durch Zugabe einer Mischung von 500 ml NMP und 0,78 g NaOH gelöst in 0,78 ml VE-Wasser verdünnt und eine weitere Stunde bei 160°C nachgerührt. Danach wurden weitere 500 ml NMP zugegeben. Die Suspension wurde dann bei 130°C 1 Stunde mit Methylchlorid (15 l/h) umgesetzt. Nach Abkühlen auf 80°C wurde die Suspension abgelassen, die festen Bestandteile werden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 69,4 ml/g, die Glastemperatur bei 224°C.

### Versuch 8

Es wurde ein erfindungsgemäßes Polybiphenylsulfon-Polymer durch nucleophile aromatische Polykondensation von 574,16 g (2,000 mol) Dichlordiphenylsulfon, 379,87 g (2,040 mol) Dihydroxybiphenyl, unter Einwirkung von 286,09 g (2,07 mol) Kaliumcarbonat (Pottasche B) in 2100 ml NMP hergestellt. Diese Mischung wurde 4 Stunden bei 190°C gehalten. Anschließend wurde der Ansatz durch Zugabe einer Mischung von 500 ml NMP und 1,56 g NaOH gelöst in 1,56 ml VE-Wasser verdünnt und eine weitere Stunde bei 160°C nachgerührt. Danach wurden weitere 500 ml NMP zugegeben. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 68,5 ml/g, die Glastemperatur bei 224°C.

Die Eigenschaften der Polybiphenylsulfon-Polymereaus den Versuchen V1 bis V4 und 5 bis 8 und anschließender Extrusion wie oben beschrieben sind in Tabelle 1 zusammengefasst.

**Tabelle 1:**

| Beispiel | V1 | V2 | V3 | V4 | 5 | 6 | 7 | 8 |
|---|---|---|---|---|---|---|---|---|
| Gehalt an polymergebundenem Halogen (Chlor) [ppm] | 710 | 670 | 560 | 540 | 330 | 360 | 120 | 70 |
| Lösungsmittel-Gehalt [ppm] | 100 | 60 | 80 | 100 | 110 | 100 | 120 | 100 |
| Yellowness Index YI | 56 | 57 | 68 | 88 | 39 | 38 | 36 | 37 |

Die Vergleichswerte für Radel ® 5000, ein Polybiphenylsulfon mit einer Viskositätszahl von 73,2 ml/g (1 Gew.-% in NMP bei RT) sind: Cl-Gehalt: 2900 ppm; Lösungsmittel-Gehalt: 2000 ppm sowie YI: 67.

Die erfindungsgemäßen Formmassen zeichnen sich somit insbesondere durch eine Kombination aus sehr geringem Gehalt an polymergebundenem Halogen, insbesondere Chlor, geringem Restlösungsmittelgehalt und guter Eigenfarbe aus.

## Patentansprüche

1. Verfahren zur Herstellung von Polybiphenylsulfon-Polymeren umfassend
(a) die Bereitstellung der Komponenten (a1) bestehend aus mindestens einer aromatischen Dihydroxyverbindung und (a2) bestehend aus mindestens einer aromatischen Sulfonverbindung mit zwei Halogensubstituenten, wobei die Komponente (a1) 4,4'-Dihydroxybiphenyl umfasst und anschließend
(b) die Umsetzung der Komponente (a2) mit einem molaren Überschuss der Komponente (a1) in einem Lösungsmittel unter Verwendung von Alkalimetallcarbonaten als Base, wobei nach der Umsetzung Wasser und/oder ein Metallhydroxid zugegeben wird.

2. Verfahren nach Anspruch 1, wobei Komponente (a2) 4,4'-Dichlordiphenylsulfon ist.

3. Verfahren nach Anspruch 1 oder 2, wobei gemäß Schritt (b) die Zugabe von Wasser und/oder eines Metallhydroxids bei einem Umsatz von mindestens 90% erfolgt.

4. Verfahren nach einem oder mehreren der Ansprüche 1 bis 3, wobei das Metallhydroxid ein Alkalimetallhydroxid ist.

5. Verfahren nach einem oder mehreren der Ansprüche 1 bis 4, wobei das Lösungsmittel N-Methylpyrrolidon umfasst.

6. Verfahren nach einem oder mehreren der Ansprüche 1 bis 5, wobei das molare Verhältnis der Komponente (a1) zu (a2) von 1,005 bis 1,2 beträgt.

7. Verfahren nach einem oder mehreren der Ansprüche 1 bis 6, wobei Komponente (a1) mindestens 50 Gew.-% 4,4'-Dihydroxybiphenyl enthält.

8. Verfahren nach einem oder mehreren der Ansprüche 1 bis 7, wobei Komponente (a1) 4,4'-Dihydroxybiphenyl ist.

9. Verfahren nach einem oder mehreren der Ansprüche 1 bis 8, wobei während oder nach der Umsetzung gemäß Schritt (b) mindestens eine aromatische organische Monochlorverbindung als Komponente (a3) zugegeben wird.

10. Verfahren nach Anspruch 9, wobei die Komponente (a3) 4-Monochlordiphenylsulfon ist.

11. Verfahren nach Anspruch 9 oder 10, wobei das Doppelte des Verhältnisses aus ((a1) - (a2)) / (a3) von 0,98 bis 1,02 beträgt, worin (a1), (a2) und (a3) die molaren Mengen der eingesetzten Komponenten (a1), (a2) und (a3) wiedergeben.

12. Verfahren nach Anspruch 11, wobei das Doppelte des Verhältnisses aus ((a1) - (a2)) / (a3) eins beträgt.

13. Verfahren nach einem oder mehreren der Ansprüche 1 bis 12, wobei in Anschluss an Schritt (b) gemäß Schritt (c) eine Umsetzung mit mindestens einer aliphatischen organischen Halogenverbindung erfolgt.

14. Verfahren nach einem oder mehreren der Ansprüche 1 bis 13, wobei in Anschluss an Schritt (b) gemäß Schritt (c) eine Umsetzung mit mindestens einem Alkylchlorid erfolgt.

15. Verfahren nach Anspruch 14, wobei das Alkylchlorid Methylchlorid ist.

16. Polybiphenylsulfon-Polymere erhältlich gemäß einem oder mehreren der Ansprüche 1 bis 15.

17. Polybiphenylsulfon-Polymere nach Anspruch 16 mit einem Gehalt an polymergebundenem Halogen, insbesondere Chlor von wenigner als 400 ppm und mindestens 10 ppm.

18. Thermoplastische Formmassen enthaltend ein Polybiphenylsulfon-Polymer gemäß Anspruch 16 oder 17.

19. Thermoplastische Formmassen gemäß Anspruch 18, weiterhin enthaltend mindestens ein Polymer ausgewählt aus Polyethersulfon (PES), Polysulfon (PSU), Polyetherimiden, Polyphenylensulfiden, Polyetheretherketonen, Polyimiden und Poly-p-phenylenen.

20. Formkörper, Fasern, Filme, Membrane oder Schäume erhältlich aus den thermoplastischen Formmassen gemäß Anspruch 18 oder 19.

21. Verwendung der thermoplastischen Formmassen gemäß Anspruch 18 oder 19 oder der Polybiphenylsulfon-Polymere gemäß Anspruch 16 oder 17 zur Herstellung von Formkörpern, Fasern, Filmen, Membranen oder Schäumen.

## Claims

1. A process for the production of polybiphenyl sulfone polymers comprising
(a) provision of components (a1) composed of at least one aromatic dihydroxy compound and (a2) composed of at least one aromatic sulfone compound having two halogen substituents, where component (a1) comprises 4,4'-dihydroxybiphenyl, and then
(b) reaction of component (a2) with a molar excess of component (a1) in a solvent, using alkali metal carbonates as base, where water and/or a metal hydroxide is added after the reaction.

2. The process according to claim 1, where component (a2) is 4,4'-dichlorodiphenyl sulfone.

3. The process according to claim 1 or 2, where according to step (b) the addition of water and/or of a metal hydroxide takes place at a conversion of at least 90%.

4. The process according to one or more of claims 1 to 3, where the metal hydroxide is an alkali metal hydroxide.

5. The process according to one or more of claims 1 to 4, where the solvent comprises N-methylpyrrolidone.

6. The process according to one or more of claims 1 to 5, where the molar ratio of component (a1) to (a2) is from 1.005 to 1.2.

7. The process according to one or more of claims 1 to 6, where component (a1) comprises at least 50% by weight of 4,4'-dihydroxybiphenyl.

8. The process according to one or more of claims 1 to 7, where component (a1) is 4,4'-dihydroxybiphenyl.

9. The process according to one or more of claims 1 to 8, where at least one aromatic organic monochloro compound is added as component (a3) during or after the reaction according to step (b).

10. The process according to claim 9, where component (a3) is 4-monochloro-diphenyl sulfone.

11. The process according to claim 9 or 10, where the ratio ((a1) - (a2)) / (a3) multiplied by two is from 0.98 to 1.02, where (a1), (a2), and (a3) are the molar amounts of components (a1), (a2), and (a3) used.

12. The process according to claim 11, where the ratio ((a1) - (a2)) / (a3) multiplied by two is one.

13. The process according to one or more of claims 1 to 12, where, following step (b), according to step (c) a reaction takes place with at least one aliphatic organic halogen compound.

14. The process according to one or more of claims 1 to 13, where, following step (b), according to step (c) a reaction takes place with at least one alkyl chloride.

15. The process according to claim 14, where the alkyl chloride is methyl chloride.

16. A polybiphenyl sulfone polymer obtainable according to one or more of claims 1 to 15.

17. The polybiphenyl sulfone polymer according to claim 16, having less than 400 ppm and at least 10 ppm content of polymer-bonded halogen, in particular chlorine.

18. A thermoplastic molding composition comprising a polybiphenyl sulfone polymer according to claim 16 or 17.

19. The thermoplastic molding composition according to claim 18, also comprising at least one polymer selected from polyether sulfone (PES), polysulfone (PSU), polyetherimides, polyphenylene sulfides, polyetherether ketones, polyimides, and poly-p-phenylenes.

20. A molding, fiber, film, membrane, or foam obtainable from the thermoplastic molding compositions according to claim 18 or 19.

21. The use of the thermoplastic molding compositions according to claim 18 or 19 or of the polybiphenyl sulfone polymers according to claim 16 or 17 for the production of moldings, of fibers, of films, of membranes, or of foams.

## Revendications

1. Procédé de fabrication de polymères de polybiphénylsulfone, comprenant :
(a) la préparation du composant (a1) constitué par au moins un composé dihydroxy aromatique et du composant (a2) constitué par au moins un composé de sulfone aromatique contenant deux substituants halogène, le composant (a1) comprenant du 4,4'-dihydroxybiphényle, puis
(b) la mise en réaction du composant (a2) avec un excès molaire du composant (a1) dans un solvant en utilisant des carbonates de métaux alcalins en tant que base, de l'eau et/ou un hydroxyde métallique étant ajoutés après la réaction.

2. Procédé selon la revendication 1, dans lequel le composant (a2) est la 4,4'-dichlorodiphénylsulfone.

3. Procédé selon la revendication 1 ou 2, dans lequel l'ajout d'eau et/ou d'un hydroxyde métallique selon l'étape (b) a lieu à une conversion d'au moins 90 %.

4. Procédé selon une ou plusieurs des revendications 1 à 3, dans lequel l'hydroxyde métallique est un hydroxyde de métal alcalin.

5. Procédé selon une ou plusieurs des revendications 1 à 4, dans lequel le solvant comprend de la N-méthylpyrrolidone.

6. Procédé selon une ou plusieurs des revendications 1 à 5, dans lequel le rapport molaire entre les composants (a1) et (a2) est de 1,005 à 1,2.

7. Procédé selon une ou plusieurs des revendications 1 à 6, dans lequel le composant (a1) contient au moins 50 % en poids de 4,4'-dihydroxybiphényle.

8. Procédé selon une ou plusieurs des revendications 1 à 7, dans lequel le composant (a1) est le 4,4'-dihydroxybiphényle.

9. Procédé selon une ou plusieurs des revendications 1 à 8, dans lequel au moins un composé de monochlore organique aromatique est ajouté pendant ou après la réaction selon l'étape (b) en tant que composant (a3).

10. Procédé selon la revendication 9, dans lequel le composant (a3) est la 4-monochlorodiphénylsulfone.

11. Procédé selon la revendication 9 ou 10, dans lequel le double du rapport de ((a1) - (a2)) / (a3) est de 0,98 à 1,02, (a1), (a2) et (a3) indiquant les quantités molaires des composants (a1), (a2) et (a3) utilisés.

12. Procédé selon la revendication 11, dans lequel le double du rapport de ((a1) - (a2)) / (a3) est de un.

13. Procédé selon une ou plusieurs des revendications 1 à 12, dans lequel une réaction avec au moins un composé halogéné organique aliphatique a lieu selon l'étape (c) après l'étape (b).

14. Procédé selon une ou plusieurs des revendications 1 à 13, dans lequel une réaction avec au moins un chlorure d'alkyle a lieu selon l'étape (c) après l'étape (b).

15. Procédé selon la revendication 14, dans lequel le chlorure d'alkyle est le chlorure de méthyle.

16. Polymères de polybiphénylsulfone, pouvant être obtenus selon une ou plusieurs des revendications 1 à 15.

17. Polymères de polybiphénylsulfone selon la revendication 16, ayant une teneur en halogène relié au polymère, notamment en chlore, de moins de 400 ppm et d'au moins 10 ppm.

18. Matériaux de moulage thermoplastiques contenant un polymère de polybiphénylsulfone selon la revendication 16 ou 17.

19. Matériaux de moulage thermoplastiques selon la revendication 18, contenant en outre au moins un polymère choisi parmi la polyéther-sulfone (PES), la polysulfone (PSU), les polyéther-imides, les polysulfures de phénylène, les polyéther-éther-cétones, les polyimides et les poly-p-phénylènes.

20. Corps moulés, fibres, films, membranes ou mousses, pouvant être obtenus à partir des matériaux de moulage thermoplastiques selon la revendication 18 ou 19.

21. Utilisation des matériaux de moulage thermoplastiques selon la revendication 18 ou 19 ou des polymères de polybiphénylsulfone selon la revendication 16 ou 17 pour la fabrication de corps moulés, de fibres, de films, de membranes ou de mousses.
